# EUROPEAN PATENT SPECIFICATION

(11) **EP 2 369 915 B1**
(45) Date of publication and mention of the grant of the patent: **28.11.2018**
(21) Application number: 09833770.2
(22) Date of filing: 15.12.2009
(51) Int. Cl.: A01K 15/02

(54) **STIMULUS DELIVERY DEVICE HAVING AN ADJUSTABLE STIMULUS INTENSITY RANGE**
VORRICHTUNG ZUR ABGABE EINES STIMULUS MIT EINSTELLBAREM STIMULUSINTENSITÄTSBEREICH
DISPOSITIF D'ADMINISTRATION DE STIMULUS À GAMME D'INTENSITÉS DES STIMULUS AJUSTABLE

(30) Priority: 15.12.2008 US 122627 P
(43) Date of publication of application: 05.10.2011
(73) Proprietor: Radio Systems Corporation, Knoxville, TN 37932 (US)
(72) Inventor: GILLIS, Greg, Escondido CA 90205 (US); GOETZL, Brent, Andrew, Orinda CA 94563 (US); TRACY, Lance, Oak Ridge TN 37830 (US); JAMESON, James, L., Seymour TN 37865 (US); MORGAN, Chris, Knoxville TN 37923 (US)
(74) Representative: Sawodny, Michael-Wolfgang
(86) International application number: PCT/US2009/006550
(87) International publication number: WO 2010/071675

(56) References cited:
- US-A- 6 079 367
- US-A1- 2005 145 201
- US-A1- 2007 221 138
- US-B1- 6 191 693

## Description

### BACKGROUND OF THE INVENTION

### 1. Field of the Invention

This invention pertains to an animal training device for delivering a stimulus to an animal.

### 2. Description of the Related Art

Many animal training systems include a stimulus delivery device that delivers a stimulus to an animal to correct or reward the animal for an exhibited behavior. Some of these training systems are disclosed in US 2005/145201, US 2007/221138, US 6191693 B1 and US6079367. The sensitivity of an animal to a stimulus of a particular intensity is dependent on the particular animal and can vary greatly among seemingly similar animals. This variance in sensitivity among animals can be attributed to the animal's size, age, species, breed, skin type, disposition, or general condition. When the intensity of the stimulus does not properly suit the receiving animal, the animal may be irresponsive to the stimulus or, worse, the stimulus may cause the animal to become distressed. For example, when the intensity of the stimulus is too low, it may not be sufficient to capture the animal's attention such that the animal does not alter its behavior in response to receiving the stimulus. On the other hand, when the intensity is too high, it may cause the animal distress to the extent that the animal is unmanageable.

In an effort to resolve the above-described issue, conventional animal training systems include a stimulus delivery device that is able to deliver stimuli of varying intensities to accommodate various animals. Typically, these stimulus delivery devices are in communication with a transmitter operated by a user. Typically, the transmitter includes a plurality of switches, such as push buttons, whereby each switch corresponds with a predefined stimulus intensity. When the user operates one of the plurality of switches, the stimulus delivery device delivers a stimulus having the corresponding intensity. These conventional devices are limited in that only one, or a least a limited number, of the provided intensities may actually be suitable for use with a particular animal. For example, the lowest provided intensity may be suitable for a given animal, whereas the highest provided intensity may cause the same animal distress. As another example, the highest provided intensity may be suitable for a given animal, whereas the lowest provided intensity may not affect the same animal's behavior. When only one, or a limited number, of the provided intensities are suitable for use, the available animal training schemes are limited. For example, many animal training schemes include delivering stimuli of increasing intensity in response to increasingly extreme behavior and delivering stimuli of varying intensities in conditioning an animal. Consequently, a device that provides stimuli of various intensities within an adjustable range is desired.

### BRIEF SUMMARY OF THE INVENTION

The invention is defined by the features of the device of independent claim 1 and the method of independent claim 13. In accordance with the various features of the present invention there is provided an animal training system for delivering a stimulus to an animal, whereby the intensity of the stimulus is selected from a plurality of intensities that is within a selectable range of available intensities. More specifically, the animal training system includes a transmitter device and a stimulus delivery device. A user selects the range of available intensities using, in one embodiment, the transmitter device and, in another embodiment, the stimulus delivery device. One of the plurality of intensities is selected at the transmitter device, either manually by the user or by an automated feature. Each of the plurality of intensities is within the selected range of available intensities such that each of the plurality of intensities is defined by the range of available intensities. Upon the operation of the transmitter device by the user or the detection of a behavior exhibited by the animal, the transmitter device transmits an activation signal that is indicative of the selected one of the plurality of intensities. The stimulus delivery device is carried by the animal, receives the activation signal, and delivers a stimulus to the animal, whereby the stimulus has the selected one of the plurality of intensities.

### BRIEF DESCRIPTION OF THE SEVERAL VIEWS OF THE DRAWINGS

The above-mentioned features of the invention will become more clearly understood from the following detailed description of the invention read together with the drawings in which:
Figure 1 is a block diagram illustrating one embodiment of the animal training system in accordance with the various features of the present invention;
Figure 2 is a chart illustrating one embodiment of the relationship between the range of available intensities and the plurality of intensities; and
Figure 3 is a chart illustrating the relationship of Figure 2 in greater specificity.

### DETAILED DESCRIPTION OF THE INVENTION

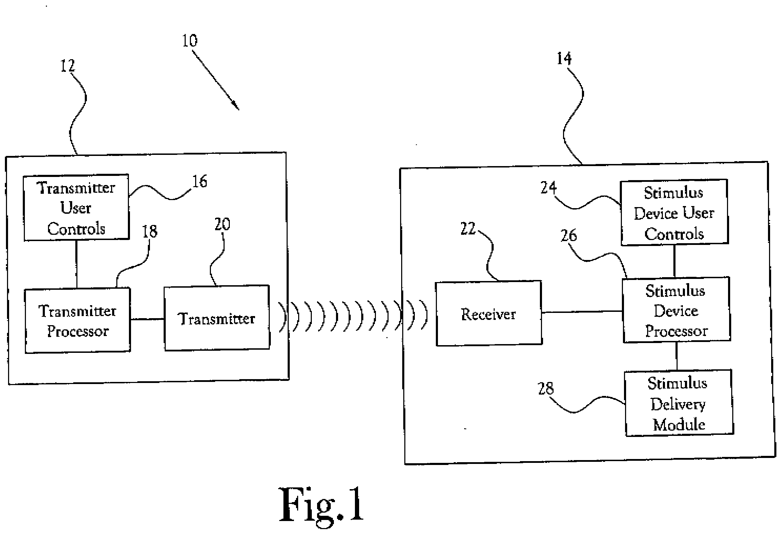

The present invention provides an animal training system for delivering a stimulus to an animal, whereby the intensity of the stimulus is selected from a plurality of intensities that is within a selectable range of available intensities. More specifically, each of the plurality of intensities is within the range of available intensities. The range of available intensities is selected or defined by a user such that the lower limit and the upper limit of the selected range of available intensities defines the lower limit for the minimum intensity and the upper limit for the maximum intensity of the plurality of intensities, respectively. Accordingly, each of the plurality of intensities is defined by the selected range of available intensities. The training system enables a user, or an automated feature, to select one of the plurality of intensities, the selected intensity defining the intensity of the stimulus delivered to the animal. Consequently, the system enables the user to select the range of available intensities such that each of the plurality of intensities is suitable to be delivered to the animal in view of the animal's particular sensitivities to the stimulus. A block diagram of one embodiment of the animal training system constructed in accordance with the various features of the present invention is illustrated generally at **10** in Figure 1.

The animal training system of Figure **1** includes a transmitter device **12** and a stimulus delivery device **14.** The transmitter device **12** is in wireless communication with the stimulus delivery device **14,** and the stimulus delivery device **14** is adapted to be carried by the animal. In the illustrated embodiment, the transmitter device **12** includes transmitter user controls **16,** a transmitter processor **18,** and a transmitter **20.** The transmitter processor **18** is in electrical communication with the transmitter user controls **16** and the transmitter **20.** Also, in the illustrated embodiment, the stimulus delivery device **14** includes a receiver **22,** stimulus device user controls **24,** a stimulus device processor **26,** and a stimulus delivery module **28.** The stimulus device processor **26** is in electrical communication with the receiver **22,** the stimulus device user controls **24,** and stimulus delivery module **28.**

The system **10** enables a user to select a range of available intensities. Selecting the range of available intensities includes selecting a range from a plurality of discrete ranges, each of the plurality of discrete ranges being either predefined or defined by the user. Selecting the range of available intensities also includes defining the range by defining the lower limit and the upper limit of the range. A plurality of intensities is defined within the selected range of available intensities such that the lower limit and the upper limit of the range define the lower limit for the minimum intensity and the upper limit for the maximum intensity of the plurality of intensities, respectively. The plurality of intensities includes two or more discrete intensities that are distributed within the range of available intensities in any manner. For example, in one embodiment, the intensities are distributed evenly within the range of available intensities such that the increase in intensity among the plurality of intensities is linear.

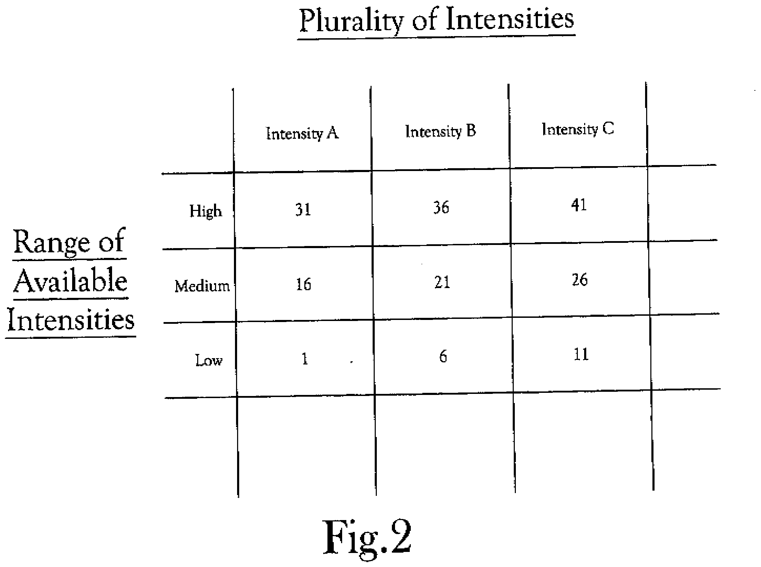

In accordance with the above discussion, each of the plurality of intensities is defined by the selected range of available intensities. To better illustrate the relationship between the plurality of intensities and the range of available intensities, consider the exemplary embodiment, illustrated at Figure 2, where the plurality of intensities includes Intensity A, Intensity B, and Intensity C and where the ranges of available intensities include a High Range, a Medium Range, and a Low Range. Also, in the illustrated embodiment, the Low Range includes intensities quantized to have values 1-11, the Medium Range includes intensities quantized to have value 16-26, and the High Range includes intensities quantized to have values 31-41. Additionally, the plurality of intensities is distributed evenly within the selected range of available intensities such that the minimum of the plurality of intensities is at the lower limit of the range and the maximum of the plurality of intensities is at the upper limit of the range. Accordingly, when the Low Range is selected, Intensity A is defined as having a value of 1, Intensity B is defined as having a value of 6, and Intensity C is defined as having a value of 11, Likewise, when the Medium Range is selected, Intensity A is defined as having a value of 16, Intensity B is defined as having a value of 21, and Intensity C is defined as having a value of 26. And, when the High Range is selected, Intensity A is defined as having a value of 31, Intensity B is defined as having a value of 36, and Intensity C is defined as having a value of 41. Considering the relationship between the range of available intensities and the plurality of intensities, the intensity value that defines each of the plurality of intensities is not fixed but is dependent on the selected range of available intensities.

As discussed above, the system 10 enables the user to select the desired range of available intensities. The range of available intensities is typically selected such that each of the plurality of intensities is suitable for use in training the animal, as will be further discussed subsequently. In one embodiment, the range of available intensities is selected using the transmitter user controls **16** of the transmitter device **12.** In another embodiment, the range of available intensities is selected using the stimulus device user controls **24** of the stimulus delivery device **14.** For example, in one embodiment, the stimulus device user controls **24** consist of an ON/OFF button, whereby the user selects the range of available intensities using the ON/OFF button. More specifically, the user activates the stimulus delivery device **14** by pressing and releasing the ON/OFF button. Immediately thereafter, the user presses and holds the ON/OFF button to invoke the function for selecting the range of available intensities. The currently selected range of available intensities is indicated by, for example, a blinking LED and/or an audible tone. While the ON/OFF button is held at the pressed position, the stimulus device processor **26** cycles through the available ranges. When the desired range of available intensities is indicated, the user releases the ON/OFF button, selecting the currently indicated range. It should be noted that the stimulus device user controls **24** can include controls other than an ON/OFF button and that the user can select the range of available intensities by ways other than that discussed above without departing from the scope of the present invention. For the purposes of the following discussion of the operation of the system **10,** the embodiment of the system **10** where the user selects the range of available intensities using the stimulus device user controls **24** is considered.

One of the plurality of intensities is selected using the transmitter device **12**. In one embodiment, the user manually selects the selected one of the plurality of intensities, In another embodiment, the selected one of the plurality of intensities is selected automatically by the transmitter device **12** based on the detection of the occurrence of a predetermined event For example, in one embodiment, the transmitter device **12** detects the distance of the stimulus delivery device **14,** and thus the distance of the animal, from the transmitter device **12.** Considering the embodiment of Figure 2, when the transmitter device **14** detects that the animal is a first distance from the transmitter device **14,** it selects Intensity A. Likewise, when the transmitter device **14** detects that the animal is a second distance from the transmitter device **14,** the second distance being greater than the first, it selects Intensity B. And, when the transmitter device **14** detects that the animal is a third distance from the transmitter device **14,** the third distance being greater than the second, it selects Intensity C. For the purposes of the following discussion of the operation of the system **10,** the embodiment of the system **10** where the user manually selects the selected one of the plurality of intensities using the transmitter user controls **16** is considered.

Considering the above-discussed exemplary embodiment, the user selects the range of available intensities using the stimulus device user controls **24** of the stimulus delivery device **14.** The selected range of available intensities is received by the stimulus device processor **26.** After the user selects the range of available intensities, the user selects one of the plurality of intensities using the transmitter user controls **16.** The selected one of the plurality of intensities is received by the transmitter processor **18**. When the user wishes to deliver the stimulus to the animal, the user activates the transmitter device **12** using the transmitter user controls **16.** The transmitter processor **18** receives the activation instructions and wirelessly transmits an activation signal, which is indicative of the selected one of the plurality of intensities, by way of the transmitter **20.** The activation signal is received by the receiver **22** of the stimulus delivery device **14** and is ultimately received by the stimulus device processor **26.** The stimulus device processor **26** considers the selected range of available intensities and the selected one of the plurality of intensities and activates the stimulus delivery module **28** to deliver a stimulus to the animal, whereby the stimulus delivered to the animal has an intensity defined by the selected range of available intensities and the selected one of the plurality of intensities. For example, considering the embodiment of Figure 2, when the user selects the High range to be the selected range of available intensities and selects Intensity B to be the selected one of the plurality of intensities, the stimulus device processor **26** activates the stimulus delivery module **28** to deliver a stimulus having an intensity having a value of 36.

As discussed above, the range of available intensities is selected such that each intensity within the range, that is each of the plurality of intensities, is suitable for use in training the animal carrying the stimulus delivery device **14**. More specifically, when the intensity of the delivered stimulus does not properly suit the animal, the animal may not be responsive to the stimulus or the stimulus may cause the animal distress. For example, when the intensity of the stimulus is too low, it may not be sufficient to capture the animal's attention when the animal is exhibiting undesired behavior. In circumstances such as these, the animal does not alter its behavior in response to receiving the stimulus. On the other hand, when the intensity is too high, it may cause the animal distress to the extent that the animal becomes unmanageable. The variance in sensitivity among animals can be attributed to the animal's size, age, species, breed, skin type, disposition, or general condition. Regardless of the reason for the variance in sensitivity among animals, the intensity of the stimulus delivered by the system **10** must be suitable for the animal carrying the stimulus delivery device **14.** Consequently, the range of available intensities is selected such that each of the plurality of intensities is suitable for the stimulus delivered to the animal. This enables the system **10** to implement a training program that utilizes stimuli of various intensities.

For example, in one embodiment, the transmitter user controls **16** include a plurality of manual controls, such as push button switches, whereby each of the plurality of manual controls corresponds to a respective one of the plurality of intensities. Along these lines, considering the embodiment of Figure 2, one embodiment of the transmitter user controls **16** includes three manual controls, a first manual control corresponding to Intensity A, a second manual control corresponding to Intensity B, and a third manual control corresponding to Intensity C. After the user selects the range of available intensities, the user operates one of the plurality of manual controls to deliver a stimulus to the animal. More specifically, when the user operates the first manual control, the stimulus delivery module **28** is activated to deliver a stimulus having Intensity A to the animal. Likewise, when the user operates the second manual control, the stimulus delivery module **28** is activated to deliver a stimulus having Intensity B to the animal. And, when the user operates the third manual control, the stimulus delivery module **28** is activated to deliver a stimulus having Intensity C to the animal. Because each of the plurality of intensities is suitable for use with the animal, the user is able to operate any of the plurality of manual controls with confidence that the stimulus will impact the animal's behavior and without concern that the stimulus will cause the animal unnecessary distress. It should be noted that configurations of the transmitter user controls **16** can vary from the above-described embodiment of the user controls without departing from the scope of the present invention.

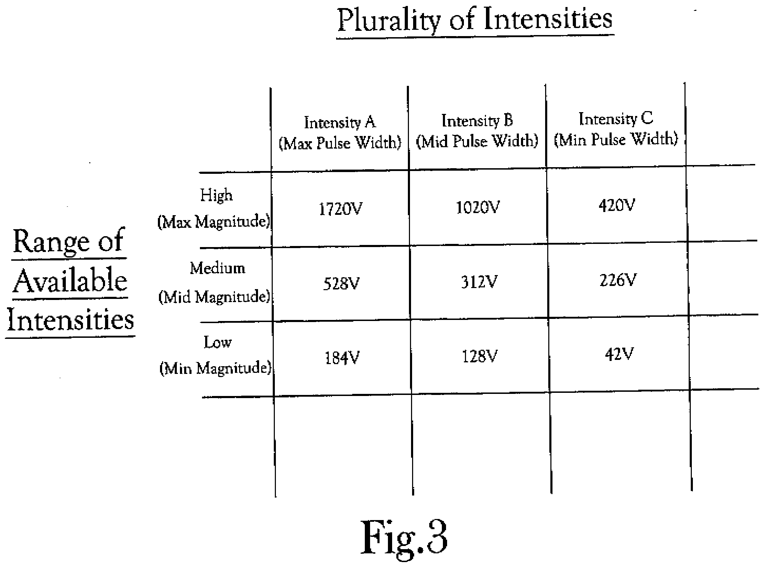

In one embodiment, the stimulus delivered to the animal is an electrical stimulus. Such a stimulus is generated by applying electrical current to certain electrical components of the stimulus delivery module **28,** thus electrically energizing the components. The stimulus is delivered by discharging this electrical energy into a load, namely the animal. In one embodiment, the intensity of the stimulus is defined by the amount of electrical current applied to the electrical components and the duration at which the current is applied. Accordingly, in such an embodiment, selecting the intensity of the stimulus includes selecting the magnitude of the electrical current applied to the electrical components and selecting the pulse width of the applied current. Along these lines, in one embodiment, the magnitude of the current applied to the components is governed by the selected range of available intensities, and the pulse width of the applied current is governed by the selected one of the plurality of intensities. Figure 3 illustrates one example of such an embodiment.

Figure 3 illustrates a more specific embodiment of that illustrated at Figure 2-More specifically, in the embodiment of Figure 3, the High Range is defined by a maximum current magnitude, the Medium Range is defined by a midway current magnitude, and the Low Range is defined by a minimum current magnitude. Additionally, Intensity A is defined by a maximum current pulse width, Intensity B is defined by a midway current pulse width, and Intensity C is defined by a minimum current pulse width. The various potential combinations of current magnitude and current pulse width result in various potential voltages. These voltages define the intensity of the stimulus delivered to the animal. Accordingly, when the Low Range is selected, Intensity A is defined as a 184V stimulus, Intensity B is defined as a 128V stimulus, and Intensity C is defined as a 42V stimulus. Likewise, when the Medium Range is selected, Intensity A is defined as a 528V stimulus, Intensity B is defined as a 312V stimulus, and Intensity C is defined as a 226V stimulus. And, when the High Range is selected, Intensity A is defined as a 1720V stimulus, Intensity B is defined as a 1020V stimulus, and Intensity C is defined as a 420V stimulus.

From the foregoing description, those skilled in the art will recognize that an animal training system for delivering a stimulus to an animal offering advantages over the prior art has been provided. More specifically, the intensity of the stimulus is selected from a plurality of intensities, whereby each of the plurality of intensities is within a range of available intensities. The range of available intensities is selected or defined by a user such that the lower limit and the upper limit of the selected range of available intensities defines the lower limit for the minimum intensity and the upper limit for the maximum intensity of the plurality of intensities, respectively. Accordingly, each of the plurality of intensities is defined by the selected range of available intensities. The training system enables a user, or an automated feature, to select one of the plurality of intensities, the selected intensity defining the intensity of the stimulus delivered to the animal. Consequently, the system enables the user to select the range of available intensities such that each of the plurality of intensities is suitable to be delivered to the animal in view of the animal's particular sensitivities to the stimulus.

While the present invention has been illustrated by description of several embodiments and while the illustrative embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative apparatus and methods, and illustrative examples shown and described. Accordingly, departures may be made from such details without departing from the scope of the appended claims.

## Claims

1. An animal training system comprising:
a transmitter device that transmits an activation signal, the activation signal indicating a selected one of a plurality of intensities within a discrete range of available intensities to be delivered to an animal, the discrete range of available intensities being selectable by a user from a plurality of discrete ranges of intensities such that the plurality of intensities within a selected discrete range of intensities are available to be delivered to the animal, each discrete range of intensities having an upper limit and a lower limit such that each of the plurality of intensities of a selected discrete range is suitable to be delivered to the animal based on particular sensitivities of the animal to the stimulus to be delivered to the animal; and
a stimulus delivery device adapted to be carried by the animal, said stimulus delivery device being configured to receive the activation signal and to deliver to the animal a stimulus having the selected one of the plurality of intensities.

2. The animal training system of Claim 1 wherein each of the plurality of intensities is suitable for use in training the animal.

3. The animal training system of Claim 1 wherein the user selects the selected one of the plurality of intensities.

4. The animal training system of Claim 1 wherein said animal training system selects the selected one of the plurality of intensities based on a detected behavior exhibited by the animal.

5. The animal training system of Claim 1 wherein said transmitter device includes transmitter device controls.

6. The animal training system of Claim 5 wherein said transmitter device transmits the activation signal in response the user's operation of at least one of the transmitter device controls.

7. The animal training system of Claim 1 wherein said transmitter device transmits the activation signal in response to detecting the occurrence of a predetermined event.

8. The animal training system of Claim 7 wherein the predetermined event includes a behavior exhibited by the animal.

9. The animal training system of Claim 1 wherein the user selects the discrete range of available intensities using said transmitter device.

10. The animal training system of Claim 1 wherein the user selects the discrete range of available intensities using said stimulus delivery device.

11. The animal training system of Claim 1 wherein the plurality of intensities available to be delivered to the animal is dependent on a selected discrete range of intensities.

12. The animal training system of Claim 1 wherein each discrete range is different than the other discrete ranges.

13. A method for selecting an intensity of a stimulus delivered to an animal, said method comprising the steps of:
selecting a discrete range of available intensities from a plurality of discrete ranges of intensities, each discrete range defining a minimum intensity and a maximum intensity for a plurality of intensities within each discrete range such that each of the plurality of intensities of a selected discrete range is suitable to be delivered to the animal based on particular sensitivities of the animal to the stimulus; and
selecting one of the plurality of intensities to be delivered to the animal from the plurality of intensities within the selected discrete range such that only the plurality of intensities within a selected discrete range of intensities are available to be delivered to the animal.

14. The method of Claim 13 wherein said step of selecting one of a plurality of intensities includes a user manually selecting one of the plurality of intensities.

15. The method of Claim 13 wherein the minimum intensity and the maximum intensity of each discrete range is different than the minimum intensity and the maximum intensity of the other discrete ranges.

## Patentansprüche

1. Tiertrainingssystem, umfassend:
eine Sendevorrichtung, die ein Aktivierungssignal sendet, wobei das Aktivierungssignal eine ausgewählte einer Vielzahl von Intensitäten innerhalb eines diskreten Bereichs verfügbarer Intensitäten angibt, die an ein Tier abgegeben werden soll, wobei der diskrete Bereich verfügbarer Intensitäten von einem Benutzer aus einer Vielzahl von diskreten Bereichen von Intensitäten ausgewählt werden kann, derart, dass die Vielzahl von Intensitäten innerhalb eines ausgewählten diskreten Bereichs von Intensitäten für die Abgabe an das Tier verfügbar ist, wobei jeder diskrete Bereich von Intensitäten eine Obergrenze und eine Untergrenze aufweist, derart, dass jede der Vielzahl von Intensitäten eines ausgewählten diskreten Bereichs ausgehend von der jeweiligen Empfindlichkeit des Tieres gegenüber dem an das Tier abzugebenden Stimulus für die Abgabe an das Tier geeignet ist; und
eine Stimulus-Abgabevorrichtung, die dafür angepasst ist, von dem Tier getragen zu werden, wobei die Stimulus-Abgabevorrichtung dafür konfiguriert ist, das Aktivierungssignal zu empfangen und an das Tier einen Stimulus mit der ausgewählten der Vielzahl von Intensitäten abzugeben.

2. Tiertrainingssystem nach Anspruch 1, wobei jede der Vielzahl von Intensitäten zur Verwendung beim Training des Tieres geeignet ist.

3. Tiertrainingssystem nach Anspruch 1, wobei der Benutzer die ausgewählte der Vielzahl von Intensitäten auswählt.

4. Tiertrainingssystem nach Anspruch 1, wobei das Tiertrainingssystem die ausgewählte der Vielzahl von Intensitäten auf der Basis eines erfassten von dem Tier gezeigten Verhaltens auswählt.

5. Tiertrainingssystem nach Anspruch 1, wobei die Sendevorrichtung Bedienelemente der Sendevorrichtung umfasst.

6. Tiertrainingssystem nach Anspruch 5, wobei die Sendevorrichtung das Aktivierungssignal als Reaktion auf das Betätigen mindestens eines der Bedienelemente der Sendevorrichtung durch den Benutzer überträgt.

7. Tiertrainingssystem nach Anspruch 1, wobei die Sendevorrichtung das Aktivierungssignal als Reaktion auf das Erfassen des Auftretens eines vorbestimmten Ereignisses überträgt.

8. Tiertrainingssystem nach Anspruch 7, wobei das vorbestimmte Ereignis ein von dem Tier gezeigtes Verhalten beinhaltet.

9. Tiertrainingssystem nach Anspruch 1, wobei der Benutzer den diskreten Bereich verfügbarer Intensitäten mittels der Sendevorrichtung auswählt.

10. Tiertrainingssystem nach Anspruch 1, wobei der Benutzer den diskreten Bereich verfügbarer Intensitäten mittels der Stimulus-Abgabevorrichtung auswählt.

11. Tiertrainingssystem nach Anspruch 1, wobei die für die Abgabe an das Tier verfügbare Vielzahl von Intensitäten von einem ausgewählten diskreten Bereich von Intensitäten abhängt.

12. Tiertrainingssystem nach Anspruch 1, wobei sich jeder diskrete Bereich von den anderen diskreten Bereichen unterscheidet.

13. Verfahren zum Auswählen einer Intensität eines an ein Tier abgegebenen Stimulus, wobei das Verfahren die folgenden Schritte umfasst:
Auswählen eines diskreten Bereichs verfügbarer Intensitäten aus einer Vielzahl von diskreten Bereichen von Intensitäten, wobei jeder diskrete Bereich eine minimale Intensität und eine maximale Intensität für eine Vielzahl von Intensitäten innerhalb jedes diskreten Bereichs definiert, derart, dass jede der Vielzahl von Intensitäten eines ausgewählten diskreten Bereichs ausgehend von der jeweiligen Empfindlichkeit des Tieres gegenüber dem Stimulus für die Abgabe an das Tier geeignet ist; und
Auswählen einer der Vielzahl von Intensitäten, die an das Tier abgegeben werden soll, aus der Vielzahl von Intensitäten innerhalb des ausgewählten diskreten Bereichs, derart, dass nur die Vielzahl von Intensitäten innerhalb eines ausgewählten diskreten Bereichs von Intensitäten für die Abgabe an das Tier verfügbar ist.

14. Verfahren nach Anspruch 13, wobei der Schritt des Auswählens einer der Vielzahl von Intensitäten beinhaltet, dass ein Benutzer manuell eine der Vielzahl von Intensitäten auswählt.

15. Verfahren nach Anspruch 13, wobei sich die minimale Intensität und die maximale Intensität jedes diskreten Bereichs von der minimalen Intensität und der maximalen Intensität der anderen diskreten Bereiche unterscheiden.

## Revendications

1. Système d'entraînement pour animal comprenant:
un dispositif émetteur qui émet un signal d'activation, le signal d'activation indiquant une intensité sélectionnée parmi une pluralité d'intensités dans une plage discrète d'intensités disponibles à délivrer à un animal, la plage discrète d'intensités disponibles pouvant être sélectionnée par un utilisateur parmi une pluralité de plages discrètes d'intensités de sorte que la pluralité d'intensités dans une plage discrète sélectionnée d'intensités soit disponible pour être délivrée à l'animal, chaque plage discrète d'intensités ayant une limite supérieure et une limite inférieure de sorte que chacune de la pluralité d'intensités d'une plage discrète sélectionnée convienne pour être délivrée à l'animal d'après des sensibilités particulières de l'animal au stimulus à délivrer à l'animal; et
un dispositif de délivrance de stimulus adapté pour être porté par l'animal, ledit dispositif de délivrance de stimulus étant configuré pour recevoir le signal d'activation et pour délivrer à l'animal un stimulus ayant l'intensité sélectionnée parmi la pluralité d'intensités.

2. Système d'entraînement pour animal selon la revendication 1, dans lequel c hacune de la pluralité d'intensités convient pour être utilisée dans l'entraînement de l'animal.

3. Système d'entraînement pour animal selon la revendication 1, dans lequel l'utilisateur sélectionne l'intensité sélectionnée parmi la pluralité d'intensités.

4. Système d'entraînement pour animal selon la revendication 1, dans lequel ledit système d'entraînement pour animal sélectionne l'intensité sélectionnée parmi la pluralité d'intensités d'après un comportement détecté adopté par l'animal.

5. Système d'entraînement pour animal selon la revendication 1, dans lequel ledit dispositif émetteur inclut des commandes de dispositif émetteur.

6. Système d'entraînement pour animal selon la revendication 5, dans lequel ledit dispositif émetteur émet le signal d'activation en réponse à l'actionnement par l'utilisateur d'au moins l'une des commandes de dispositif émetteur.

7. Système d'entraînement pour animal selon la revendication 1, dans lequel ledit dispositif émetteur émet le signal d'activation en réponse à la détection de la survenue d'un événement prédéterminé.

8. Système d'entraînement pour animal selon la revendication 7, dans lequel l'événement prédéterminé inclut un comportement adopté par l'animal.

9. Système d'entraînement pour animal selon la revendication 1, dans lequel l'utilisateur sélectionne la plage discrète d'intensités disponibles à l'aide dudit dispositif émetteur.

10. Système d'entraînement pour animal selon la revendication 1, dans lequel l'utilisateur sélectionne la plage discrète d'intensités disponibles à l'aide dudit dispositif de délivrance de stimulus.

11. Système d'entraînement pour animal selon la revendication 1, dans lequel la pluralité d'intensités disponibles pour être délivrées à l'animal est dépendante d'une plage discrète sélectionnée d'intensités.

12. Système d'entraînement pour animal selon la revendication 1, dans lequel chaque plage discrète est différente des autres plages discrètes.

13. Procédé de sélection d'une intensité d'un stimulus à délivrer à un animal, ledit procédé comprenant les étapes:
de sélection d'une plage discrète d'intensités disponibles parmi une pluralité de plages discrètes d'intensités, chaque plage discrète définissant une intensité minimale et une intensité maximale pour une pluralité d'intensités dans chaque plage discrète de sorte que chacune de la pluralité d'intensités d'une plage discrète sélectionnée convienne pour être délivrée à l'animal d'après des sensibilités particulières de l'animal au stimulus; et
de sélection de l'une de la pluralité d'intensités à délivrer à l'animal parmi la pluralité d'intensités dans la plage discrète sélectionnée de sorte que seule la pluralité d'intensités dans une plage discrète sélectionnée d'intensités soit disponible pour être délivrée à l'animal.

14. Procédé selon la revendication 13, dans lequel ladite étape de sélection de l'une d'une pluralité d'intensités inclut une sélection manuelle par utilisateur de l'une de la pluralité d'intensités.

15. Procédé selon la revendication 13, dans lequel l'intensité minimale et l'intensité maximale de chaque plage discrète sont différentes de l'intensité minimale et de l'intensité maximale des autres plages discrètes.
